Europäisches Patentamt

European Patent Office

Office européen des brevets

(11) Publication number: 0 373 076 A2

# EUROPEAN PATENT APPLICATION

(21) Application number: 89403424.8

(51) Int. Cl.5: **B60R 25/04**

(22) Date of filing: **11.12.89**

(30) Priority: **09.12.88 CA 585582**

(43) Date of publication of application:
**13.06.90 Bulletin 90/24**

(84) Designated Contracting States:
**AT BE CH DE ES FR GB GR IT LI LU NL SE**

(71) Applicant: **SAVDA SECURITE INC.**
**8230, Island Avenue**
**Laval (Québec) H7A 1R7(CA)**

(72) Inventor: **Manuri, André**
**8150, 14th Avenue**
**St-François Laval Québec H7A 1B7(CA)**
Inventor: **Guertin, Bernard**
**8230, Island Avenue**
**Laval Québec H7A 1R7(CA)**
Inventor: **Do Van, Hanh**
**890 Sauvé Street 5**
**Montréal Quebec H2C 1Z2(CA)**
Inventor: **Hebert, Marc**
**3881 Mance Street**
**Laval Quebec H7P 1P3(CA)**

(74) Representative: **Signore, Robert et al**
**c/o SOCIETE DE PROTECTION DES**
**INVENTIONS 25, rue de Ponthieu**
**F-75008 Paris(FR)**

(54) System to prevent theft of a vehicle and operation thereof by an incapacitated person.

(57) The invention relates to a system to prevent theft of a motor vehicle and operation of the vehicle by a person under the influence of alcohol or drugs. The system comprises a keyboard with alphameric keys arranged in a non-consecutive order, the keyboard being coupled to an electronic controller. To operate the vehicle, the driver must enter the correct code within a predetermined time period, otherwise the vehicle will be disabled. To enhance the anti-theft functions of the system, it is provided with sensors to detect forced entry coupled to an audible alarm.

Fig. 1

# SYSTEM TO PREVENT THEFT OF A VEHICLE AND OPERATION THEREOF BY AN INCAPACITATED PERSON.

## FIELD OF THE INVENTION

The present invention relates to an apparatus for preventing operation of a motor vehicle by an incapacitated person by testing the motor skills of the person. Advantageously, the apparatus also serves as a vehicle anti-theft device.

## BACKGROUND OF THE INVENTION

In the past recent years, the dramatic increase of fatalities resulting from car accidents involving drivers under the influence of alcohol or drugs has motivated legislative bodies to enact legislation imposing heavy fines and jail terms for drunk drivers. However, those measures have been partially successful because they act as a deterrent only.

To overcome this problem, it has been suggested to provide motor vehicles with devices that will prevent operation thereof by an intoxicated driver. The capability of the driver to take charge of the vehicle is measured by determining the amount of alcohol contained in his breath. If the alcohol concentration exceeds a certain limit, the vehicle will be disabled.

Throughout testing and experimentation, it has been found that such breath analysers have very little ability for practical use because they can be easily defeated simply by submitting a sample of clean air for analysis instead of a sample of the driver's breath.

Sobriety testers determining the degree of impairment of a driver by measuring his ability to control the motion of the hand, or other limbs with accuracy, are also known. The motor skills of the subject are tested typically by determining the amount of time required to perform a relatively simple task such as displacing elements of a mechanical structure in a predetermined sequence. However, those devices have been proven impractical because they require a relatively bulky mechanism to be mounted in the cabin of a vehicle which may not be acceptable by current aesthetic standards.

## OBJECT AND STATEMENT OF THE INVENTION

Therefore, an object of the present invention is an improved apparatus to prevent operation of a motor vehicle by an incapacitated person by measuring the driver's motor ability, which is relatively inexpensive and reliable, and occupies a small amount of space.

The object of this invention is achieved by providing the motor vehicle with an electronic system that requires a proper code to be entered, within a predetermined time period, before the vehicle is allowed to operate. In a preferred embodiment, the electronic system includes a keyboard for dialing a vehicle starting code, the keyboard comprising a plurality of numeric keys arranged in a non-consecutive order to render the code entry process more difficult requiring alertness that an intoxicated driver lacks. The keyboard is connected to an electronic controller, preferably microprocessor based, comprising a memory in which is stored a reference code to be compared with the dialed code. In the absence of match, the controller will not allow the motor of the vehicle to be started.

The electronic controller has provisions to measure the period of time taken for entering the code, and the period of time taken for each key stroke. If these time periods do not respect specific requirements, the vehicle will not be allowed to operate regardless whether the dialed code is the right code or not.

Therefore, to operate the vehicle, the driver must enter the correct code within the alloted time otherwise the electronic controller will switch to a shut-off mode, disabling the vehicle for a predetermined period of time which is relatively long, such as an hour or so, to enable the driver to regain some alertness. At the end of this time period, the driver is allowed to try the sobriety test again.

The selectivity of the electronic system, in other words the ability of the system to differentiate between intoxicated and capable drivers, is based on three parameters namely the code complexity, the maximum alloted time to enter the code, and the minimum alloted time to activate each key. By varying these parameters, the system may be made more or less selective, as desired.

Therefore, the electronic controller is programmed to validate a key stroke only if the key is maintained depressed during a minimum time period, of the order of one second. If this requirement is not met, the

2

controller will not consider the key stroke. This feature further enhances the capability of the device to accurately determine if the driver is intoxicated.

Advantageously, the controller is so programmed as to allow several attempts to enter the correct code before switching to the shut-off mode, which is useful for situations where a sober driver accidentally depresses the wrong key. Typically, five attempts are allowed and if all these attempts are failed, the vehicle will be disabled. Such characteristic is not essential to the invention, however, it is preferred because it facilitates the public acceptance of the product without strongly affecting the system accuracy since an intoxicated driver that has failed one attempt to enter the right code, very likely, will fail the remaining attempts to do so.

The driver's capability tester, according to the invention, also serves as an anti-theft device since it requires a code normally known only by the owner of the vehicle to enable the vehicle to be operated. To further enhance the anti-theft function of the apparatus, sensors may be mounted on the vehicle to detect an attempt of forced entry, glass breakage or movement of the vehicle in order to set off an alarm.

If desired, the controller is programmed to accept two codes to operate the vehicle, switching from one code to the other being achieved by entering one code and depressing a function key on the keypad. After the function key has been depressed, the controller will accept only the other code. This feature is useful when the vehicle is to be operated by a person other than the car owner, such as by a mechanic for maintenance purposes. Returning back to the original code is achieved by entering the secondary code and depressing the function key. It should be noted that regardless the code, the subject must pass the sobriety test to operate the vehicle.

Therefore, the invention comprises, in a general aspect, a system to prevent theft of a vehicle and operation thereof by an incapacitated person, comprising:
- a keyboard including a plurality of selectively actuable keys for entering a code;
- controller means coupled to a vehicle, the controller means being responsive to actuation of one or more of the keys to establish a first or second condition, in the first condition the vehicle being allowed to operate, in the second condition the vehicle being inhibited from operating, the controller means including:

a) code verification means to determine whether a keys actuation sequence forms an allowed code;

b) timer means to determine if the keys actuation sequence has been completed within an allotted time period, the controller means establishing the first condition when a keys actuation sequence corresponds to an allowed code and has been completed within the allotted time period.

The invention also extends to a system for use with a motor vehicle, comprising:
- a keyboard comprising a plurality of selectively actuable keys for entering a code;
- first means responsive to actuation of keys on the keyboard to determine whether a keys actuation sequence corresponds to an allowed code;
- second means responsive to actuation of keys on the keyboard to determine whether a keys actuation sequence has been completed within a predetermined time period;
- third means coupled to the vehicle, the third means being responsive to the first and second means to:

a) inhibit the vehicle from operating for a preset time period when the keys actuation sequence does not correspond to an allowed code or the keys actuation sequence has not been completed within the predetermined time period;

b) allow the vehicle to operate when the keys actuation sequence corresponds to an allowed code and has been completed within the predetermined time period.

In accordance with a variant of the present invention, the system to prevent theft of a vehicle and operation thereof by an incapacitated person comprises:
- a keyboard including a plurality of selectively actuable keys for entering a code;
- controller means coupled to a vehicle, which controller means being responsive to actuation of one or more of the keys to establish a first or second condition, in the first condition the vehicle being allowed to operate, in the second conditon the vehicle being inhibited from operating;
- a display unit connected to the controller means;
wherein the controller means comprises:

(a) first code verification means to determine whether a first keys actuation sequence entered on the keyboard by a driver of the vehicle corresponds to an anti-theft code stored in the controller means;

(b) means for generating a random code and for displaying this random code on the display unit;

(c) second code verification means to determine whether a second keys actuation sequence entered on the keyboard by the driver corresponds to the displayed random code.

In operation, the controller means establishes the first condition in which the vehicle is allowed to operate when the first and second keys actuation sequences entered on the keyboard by the driver are correct.

BRIEF DESCRIPTION OF THE DRAWINGS

Figure 1 is a block diagram of a vehicle anti-theft sobriety tester system according to the invention;

Figure 2 is a detailed block diagram of the system shown in Figure 1;

Figure 3 is an enlarged view of a keyboard of the system of Figures 1 and 2;

Figure 4 is a block diagram of an electronic controller of the system shown in Figure 2;

Figures 5a and 5b are logic block diagrams illustrating the operation of the system according to this invention; and

Figure 6 is an algorithm illustrating the operation of a variant of the system in accordance with the present invention.

DETAILED DESCRIPTION OF THE PREFERRED EMBODIMENTS

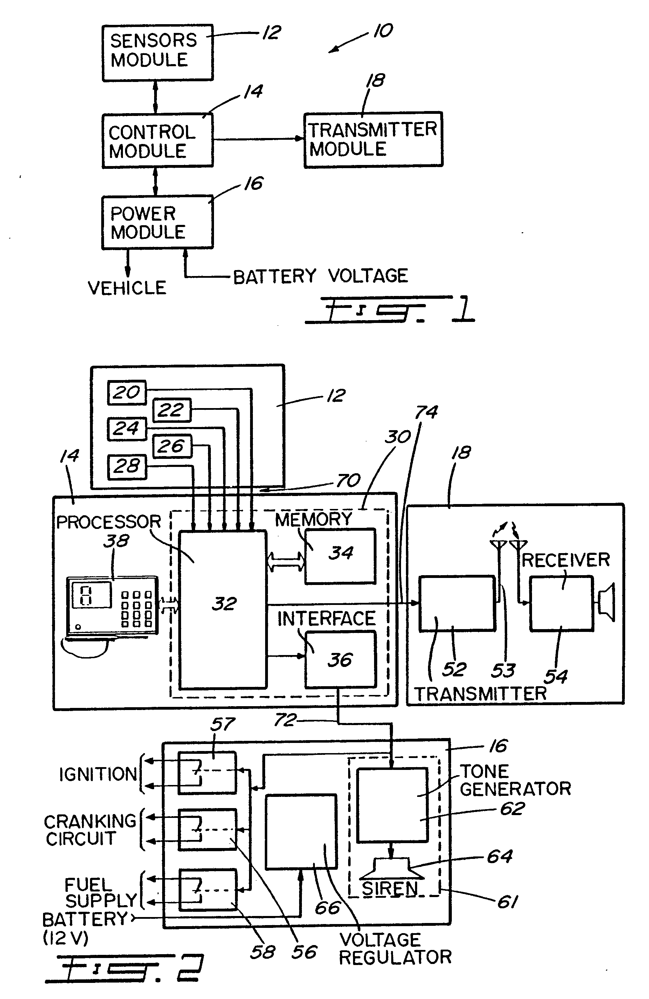

Referring now to the annexed drawings, and more particularly to Figure 1, an anti-theft and a driver's capability tester system is designated generally by the reference numeral 10. The system 10 is adapted to be installed on a motor vehicle to perform two different functions namely preventing theft of the vehicle and also preventing operation of the vehicle by a driver under the influence of alcoholor or drugs.

The system 10 comprises four main modules or sub-assemblies, namely a sensors module 12, a control module 14, a power module 16, and a transmitter module 18.

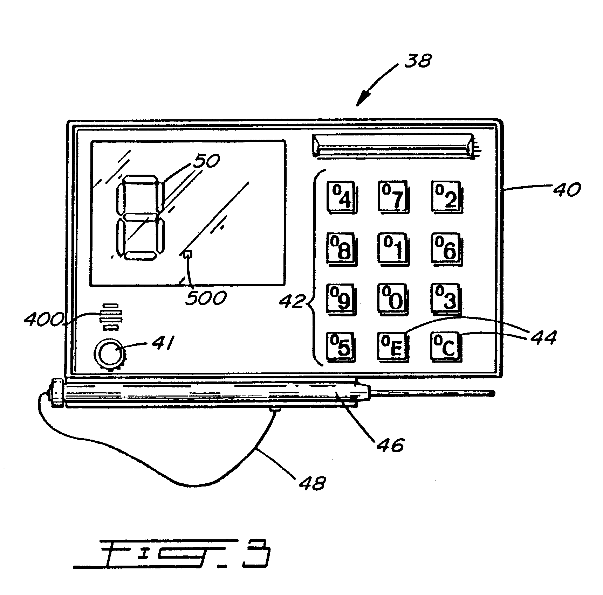

As best illustrated in Figure 2, the sensors module 12 comprises a set of sensors mounted on various locations on the vehicle to detect an attempt to perform a wrongful act on the vehicle, such as stealing the vehicle, vandalism or the like. More particularly, there is a hood sensor 22 and a trunk sensor 24, to detect opening of the hood and of the trunk respectively, a movement sensor 26 to detect an attempt to tow away the vehicle and a glass breakage sensor 28 detecting shocks on the vehicle windows. The sensors 22, 24, 26 and 28 are basically electric contacts that will change the state of an electric circuit when tripped. These sensors will not be described in detail because they are well known to those skilled in the art.

The sensors module 12 also comprises an ignition lock sensor 20, also under the form of an electric contact, mounted to the vehicle and used to determine when the ignition has been turned to the "ON" position in order to initiate the sobriety test.

The control module 14 comprises a controller 30 including an on-chip processor 32, a memory circuit 34 and a conventional interface 36. The processor is preferably of the type 8096 manufactured by Intel (trademark) or the improved version, 8051. Also, the processor manufactured by Siemens (trademark) under part number SAB 80515 has been found satisfactory.

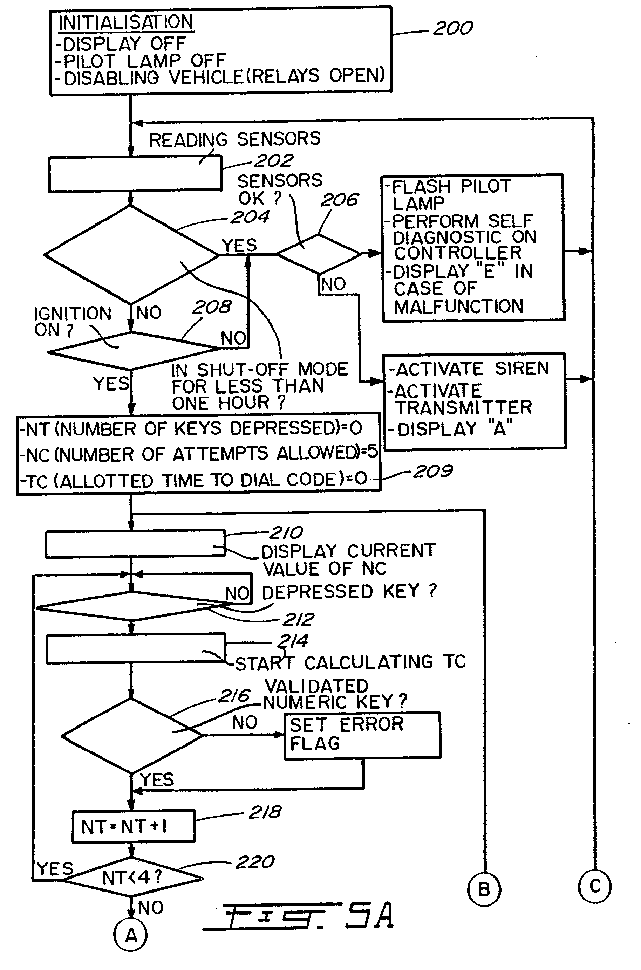

A more detailed block diagram of the processor 30 is shown in Figure 4. The processor 32 comprises a CPU (central processing unit) 33 constituted by a file register 100 and an ALU (arithmetic logic unit) 102 and is coupled through a bus 104 to a memory controller circuit 106 which, in turn, is coupled to an internal memory 35.

An interesting feature of the processor 32 is the provision of a self-diagnostic circuit 110, the so called "watchdog timer" capable of resetting the processor 32 in the event of software collapse.

The remaining circuits of the processor 32, identified by labelled blocks, will not be described here because they are commonly used in microprocessor based circuits, well known to those skilled in the art.

More information on the Intel 8096 controller can be obtained in the technical brochure published by the manufacturer under order numbers 27061-002 and 270014-003.

The memory 34, containing the software for the processor 32 is stored into a separate ROM (read-only memory) coupled to the processor 32.

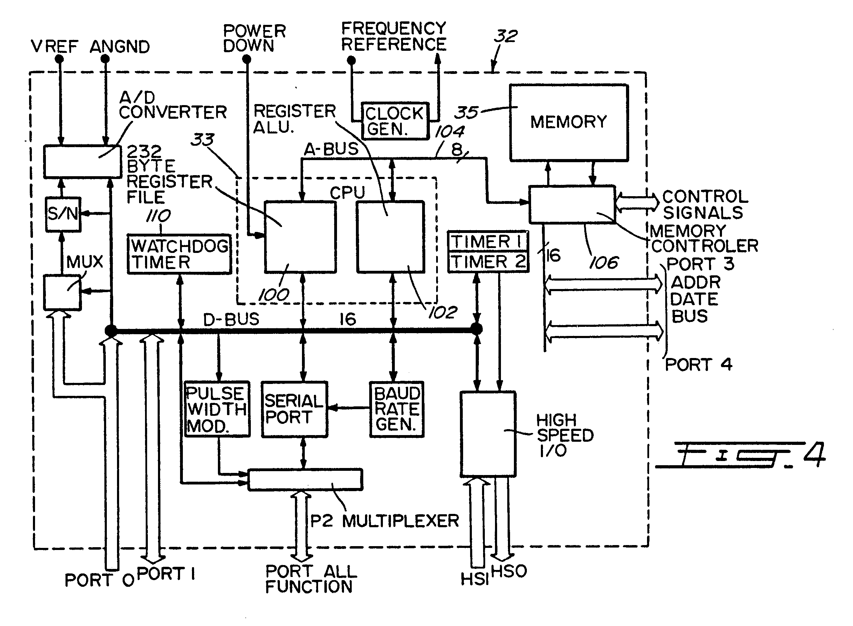

Information to the controller 30 is fed through a keyboard 38 coupled to the controller 30. The keyboard 38, best shown in Figure 3, comprises a support 40 on which are mounted 12 alphameric keys 42, there being ten numeric keys numbered from 0 to 9 for entering a four digit vehicle starting code, and two function keys 44 identified by the letters E and C respectively. The numeric keys are arranged in a non consecutive order on the support 40, in other words they are randomly distributed.

The keys 42 are small and they are tightly grouped so that they cannot be depressed with a finger and, to this end, a small, stylus-like object 46 is required, which is mounted to the support 40 and attached thereto by a cord 48 to prevent loss thereof.

Each key 42 has a top face with a concavity acting as a locator for the stylus 46.

The support 40 also comprises a single digit display 50, preferably a seven segment LED display, although a liquid crystal display may also be used.

A pilot lamp 41 is mounted below the display 50, and a buzzer 400 gives an audible indication upon activation of any key 42.

Referring back to Figure 2, the transmitter module 18 comprises a radio transmitter 52 connected to the car antenna 53, or any suitable antenna, for transmitting a signal to a battery powered pocket receiver 54 that is normally carried by the owner of the vehicle.

The transmitter module 18 serves to warn, at a distance, the owner of the vehicle that the alarm system has been activated. Such transmitter modules are used in conventional car alarm systems and for such reason they will not be described in detail.

The power module 16 comprises normally opened relays 56, 57 and 58 in series with the starter, the ignition and the fuel supply system of the vehicle, (such as an electric fuel pump or the electric circuit of the fuel injectors) respectively, connected to the interface 36 of the controller 30 through a bus 72. The power module 16 also includes an audible alarm 61 coupled to the bus 72, including a tone generator/amplifier 62 connected to a siren 64. The power module 16 further comprises a voltage regulator 66 connected to the battery of the vehicle to supply current at a highly regulated voltage, typically 5 volts, to the controller module 14.

The control module 14 is mounted in the cabin of the vehicle at any convenient location.

## SYSTEM OPERATION

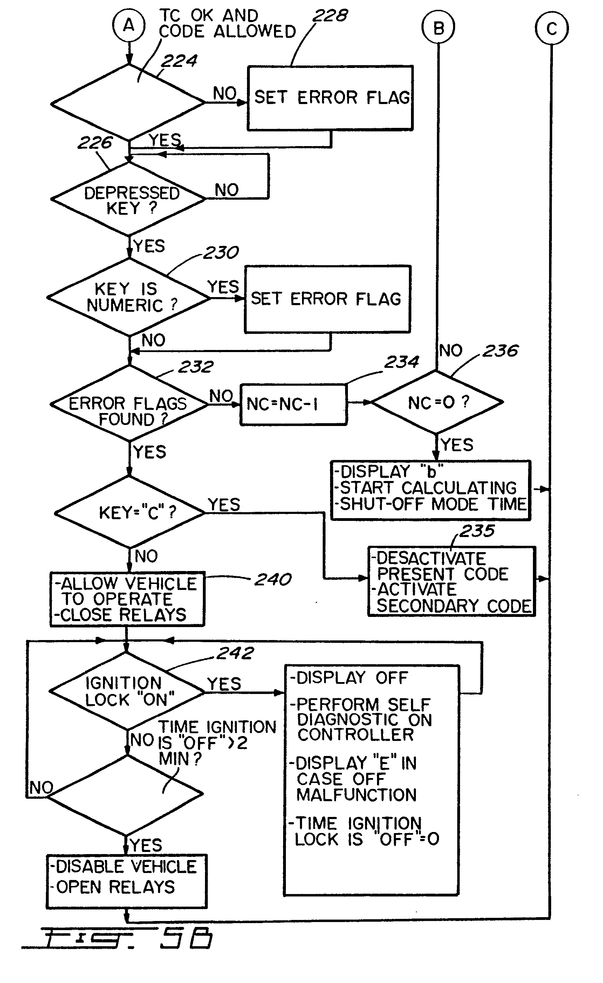

The operation of the system 10 will be described with relation to the logic bloc diagram of Figures 5a and 5b.

The system 10 is set in operation through an initialisation step 200 in which the display 50 and the pilot lamp 41 are turned off, the relays 56, 57, 58 remaining open to prevent operation of the vehicle.

The initialisation step is followed by a sensors reading step 202 where the controller 30 successively interrogates each of the sensors 22, 24, 26 and 28 to determine their state.

The reading step 202 is followed by a decision step 204 to determine if the controller 30 is in the shut-down mode (due to a failure of the sobriety test, for example) for a period of time not exceeding the preset time period during which the system 10 maintains the vehicle disabled after a failure of the sobriety test. If the answer is "yes", the controller 30 will check at the step 206 the state of the sensors scanned at the step 202. If none of the sensors has been tripped, the pilot lamp 41 will start flashing and the controller 30 will perform a self-diagnostic test through the watchdog timer circuit 110. If a malfunction is detected, the letter "E" will be displayed on the display 50, indicating that service is required. The system 10 then returns to step 202.

If at step 206 a tripped sensor is detected, the audible alarm 61 and the transmitter 52 are activated and the letter "A" will be displayed on the display 50. The alarm will remain activated for a predetermined period of time, typically five minutes. The system 10 then returns to step 202.

If the answer to the decision step 204 is "no", the controller 30 will check the ignition lock sensor 20, at step 208, to determine if the ignition lock is in the "on" state. If the answer is "no" the system goes to step 206.

The system 10 will remain in the loop defined between steps 202 and 208 when the vehicle is not operated such as when it is parked.

If the answer to the decision step 208 is yes, the system 10 will exit the loop and it will begin the sobriety test by advancing to step 209 where, in the memory 35 of the processor 32, the following data is loaded:

| Parameter | Value Loaded |
|---|---|
| NT (number of keys depressed) | 0 |
| NC (maximum number of attempts allowed to pass the sobriety test) | 5 |
| TC (maximum time to enter the vehicle starting code) | 0 |

At step 212, the controller 30 will start to scan the keyboard 42 to determine if a key, be it numeric of function, is depressed. If a key is found depressed, the system 10 will advance to step 214 which consists of starting to measure TC. In this example, TC is set at eight seconds.

At step 216, the type of depressed key is identified and validated if maintained depressed for a preset time period, in the order of one second. If the depressed key is found to be a function key or if the keystroke is not validated, an error flag is set. Regardless of the answer at decision step 216, the memory circuit of the controller 30 containing the number of keys consecutively depressed (NT) is incremented by one, at step 218.

At step 220, the value of NT is verified. If it is less than four, the system returns to step 212. If NT is equal to four, TC is determined and the sytem 10 advances to a decision step 224 during which the entered code is verified and the value of TC is compared to the reference code stored in the memory 35, an error flag being set at 228 if the entered code does not match the reference code or if TC exceeds the predetermined limit.

If a depressed key is found at the next step 226, it is identified at step 230. If the key is found to be numeric, an error flag is set. If the key is a function key, no error flag is set and the system proceeds to step 232. During the step 232, the controller 30 searches for error flags which may have been set previously, such as at steps 216, 224 or 230. If an error flag is located, the controller 30 considers that the attempt to pass the sobriety test has been failed and the value of NC in the memory 35 of the controller 30 is reduced by one at step 234.

A comparison step 236 is then performed on the recalculated value of NC. If NC is not equal to zero, the system returns to step 202 to enable the driver to try the sobriety test again.

If the value of NC is equal to zero, indicating that all allowable attempts have been failed, the system 10 goes into the shut-down mode and returns to step 202. Simultaneously, a timer is started for measuring the elapsed time from the moment the system 10 returns to step 202, to indicate when the driver is allowed to try the sobriety test again, and the letter "B" is displayed on the display 50.

It should be noted that at steps 206 and 236, when a vehicle shut-down condition is to be established, no action is taken on the ignition, the fuel supply and the cranking circuits of the vehicle since these circuits have already been opened at the initialization step 200.

If at the step 232 no error flag is found, the system 10 considers that the sobriety test has been passed. If the depressed key found during the step 226 is identified to be the key "C", the system 10 goes to step 235 to perform a vehicle starting code change so that the vehicle can be operated using a second code.

If the depressed key found at step 226 is the function key "E", the ignition, fuel supply and cranking system will be completed by closing relays 56, 57 and 58 to permit a normal operation of the vehicle, such as indicated at step 240.

During the operation of the vehicle, the ignition lock sensor is monitored continuously, at step 242, to determine if it is in the "ON" position. If it is "ON", the pilot lamp is flashed, the display is turned off and the controller 30 executes periodically a self diagnostic test. If a malfunction is identified, "E" is displayed.

When the key in the ignition lock is turned to the "OFF" position, in other words, when the engine of the vehicle is stopped for more than two minutes, the vehicle is disabled by opening the fuel supply, the ignition and the cranking system circuits. The system 10 then returns to step 202.

In a variant, the system 10 may be provided with an indicator to indicate that a depressed key of the beyboard has been validated. The indication may be visual such as a small light source activated when a keystroke is validated or audible, emitting a tone when a keystroke is validated.

In accordance with another variant of the present invention, the above described sobriety test is replaced by the following test including two steps, namely an anti-theft step and a sobriety step.

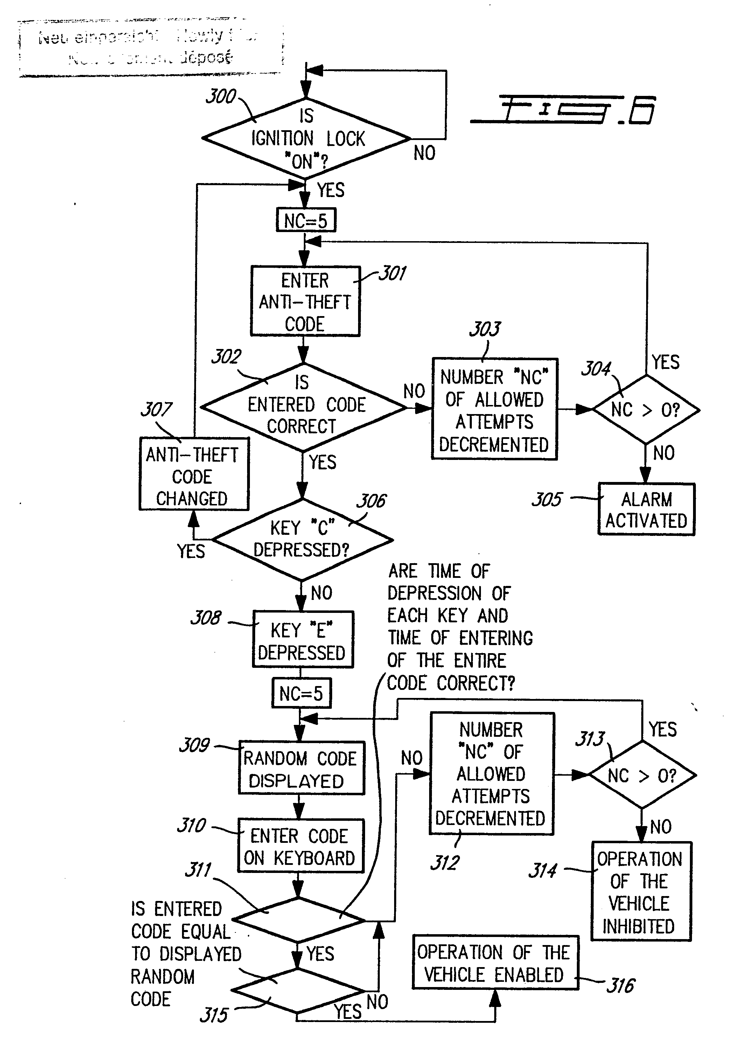

First of all, the driver must turn the ignition lock of the vecicle in the "ON" position. At decision step 300 in Figure 6, the controller 30 checks the sensor 20 to determine whether the ignition lock is in the "ON" position.

## ANTI-THEFT STEP

If decision step 300 indicates that the ignition lock is in the "ON" position, the number of allowed attempts NC is loaded with the maximum number of allowed attempts (for example 5). The driver enters a four-digit anti-theft code through depression of the numeric keys on the keyboard 38 (step 301 in Figure 6). The controller 30 then compares the so entered code with the one stored in memory 35 (decision step 302). The time required by the driver to enter the anti-theft code and the minimum time required for each key stroke are not taken into consideration in the decision of step 302. If the comparison indicates that the entered code is incorrect, the number of allowed attempts NC is decremented by one (step 303). If the number NC is still higher than zero (decision step 304), the driver can try again to enter the correct anti-theft code. Otherwise the audible alarm 61 is activated (step 305).

If the entered anti-theft code is correct (decision step 302) and the key "C" depressed (decision step 306), a secondary four-digit anti-theft code stored in memory 35 is activated (step 307). Memory 35 therefore stores two anti-theft codes. The same procedure is followed to reactivate the first, principal code. A secondary code is useful for example when the vehicle is left to the garage mechanic.

Although the system includes two anti-theft codes, only the activated one is recognized by the controller 30 during decision step 302. Activation of the secondary code is indicated by a decimal point 500 shown in Figure 3. If the decimal point 500 does not appear in the display 50, the principal code is activated.

## SOBRIETY STEP

If the entered anti-theft code is correct (decision step 302) and the key "C" is not depressed (decision step 306), the key "E" of the keyboard 38 can be depressed (step 308) to activate the sobriety step of the test. The driver has again right to the maximum number of allowed attempts (NC = 25 for example).

The controller 30 then generates a random four-digit code and sequentially displays the four digits thereof on the display 50 (step 309). The driver then repeats the random code on the keyboard 38 (step 310). During dialing of the random number, each key must be depressed for a predetermined minimum time period, for example 0.4 seconds, while the entire code must be entered within a predetermined maximum time period, for example 4 seconds. The latter maximum time period is measured by the controller 30 between the first depression of a numeric key and depression of key "E" at the end of the composition. If the composed random code, the time of depression of any of the keys, and/or the time of the entire composition of this random code is incorrect (decision steps 311 and 315), the number of allowed attempts NC in entering the random code is decremented by one (step 312). As long as the number NC is still higher than 0 (decision step 313) the random code is repeated or another random code is displayed (step 309). If number NC reaches 0 the relays 56, 57 and 58 remains opened to prevent operation of the motor vehicle (step 314).

If the dialed random code, the time of depression of each numeric key, and the time taken for the entire composition have been all correct for a given randomly generated and displayed code (decision steps 311 and 315), operation of the motor vehicle is enabled (step 316).

The number of allowed attempts NC (step 303) is updated and displayed steadily during the anti-theft step, while the number of allowed attempts NC (step 312) is updated and displayed intermittently during the sobriety step.

As can be appreciated by one skilled in the art, the algorithm of Figure 6 can be inserted within the one illustrated in Figures 5A and 5B, to make the system of the invention capable of carrying out the two-step test. Obviously, the hardware described in the foregoing description is capable of conducting the latter test provided its software is modified accordingly.

The above description of preferred embodiments of the present invention should not be construed as limitative since such preferred embodiments may be refined in various ways without departing from the spirit of the invention.

## Claims

1. A system to prevent theft of a vehicle and operation thereof by an incapacitated person, comprising:
- a keyboard including a plurality of selectively actuable keys for entering a code;
- controller means coupled to a vehicle, said controller means being responsive to actuation of one or more of said keys to establish a first or second condition, in said first condition said vehicle being allowed to operate, in said second condition said vehicle being inhibited from operating, said controller means including:
   a) code verification means to determine whether a keys actuation sequence forms an allowed code;
   b) timer means to determine if said keys actuation sequence has been completed within an allotted time period, said controller means establishing said first condition when a keys actuation sequence corresponds to an allowed code and has been completed within said allotted time period.

2. A system as defined in claim 1, wherein said controller means further comprises a keystroke validation means coupled to said keyboard, said keystroke validation means including means to measure the time period during which a key is maintained actuated, said keystroke validation means validating a keystroke when a key has been maintained depressed during a minimum preset time period, said controller means establishing said first condition when each keystroke of a keys actuation sequence forming an

EP 0 373 076 A2

allowed code has been validated by said keystroke validation means.

3. A system as defined in claim 1, further comprising:
- sensor means mounted to said vehicle to detect an attempt to perform a wrongful act on said vehicle, such as vandalism, theft or the like; and
- an audible alarm, said sensor means and said audible alarm being coupled to said controller means, tripping of said sensor means causing said controller means to activate said audible alarm.

4. A system as defined in claim 3, wherein said sensor means comprises a hood sensor to detect opening of a hood of said vehicle.

5. A system as defined in claim 3, wherein said sensor means comprises a trunk sensor to detect opening of a trunk of said vehicle.

6. A system as defined in claim 3, wherein said sensor means comprises glass sensor to detect a shock against a window of said vehicle.

7. A system as defined in claim 3, wherein said sensor means comprises a movement sensor to detect a movement of said vehicle.

8. A system as defined in claim 1, wherein said code verification means comprises:
- memory means containing a reference code; and
- comparison means to compare said keys actuation sequence with said reference code, in absence of match between said keys actuation sequence and said reference code, said controller means establishing said second condition.

9. A system as defined in claim 8, wherein said memory means contains two reference codes namely an active reference code and an inactive reference code, each code being capable to assume an active and an inactive state, said comparison means comparing said keys actuation sequence only against an active code, said system comprising code state switching means including a function key on said keyboard, actuation of said function key causing each code to switch state.

10. A system as defined in claim 1, wherein said controller means further includes:
- first means for counting the number of consecutive failed attempts to establish said first condition;
- second means responsive to said first means establishing said second condition for a predetermined time period when the number of consecutive failed attempts to establish said first condition exceed a given value.

11. A system as defined in claim 1, wherein said vehicle includes a motor with a starter, said system including switch means in an electric circuit of said starter, said switch means being responsive to said controller means to open said electric circuit for establishing said second condition.

12. A system as defined in claim 11, wherein said vehicle includes an electric fuel injection system for said motor, said system further comprising a switch means in an electric circuit of said fuel injection system, the last mentioned switch means being responsive to said controller means to open the last mentioned electric circuit for deactivating said fuel injection system to establish said second condition.

13. A system as defined in claim 10, further comprising a display means coupled to said controller means, said display means being indicative of the number of attempts allowed to establish said first condition.

14. A system as defined in claim 1, wherein said keys are numeric keys and are arranged in a non consecutive order.

15. A system as defined in claim 1, further comprising a hand-held stylus-like element to actuate said keys, each of said keys further including a locator for said stylus-like element.

16. A system as defined in claim 1, wherein said controller means includes scanning means coupled to said keyboard to determine when a key has been actuated, said system further including a sensor means mounted to an ignition lock of said vehicle to indicate an attempt to operate said ignition lock, said scanning means being responsive to said sensor means and beginning to scan said keyboard when said sensor means indicates an attempt to operate said ignition lock.

17. A system as defined in claim 2, further comprising an indicator means to give an indication when a key is actuated.

18. A system as defined in claim 17, wherein said indicator means is an audible indicator.

19. A system as defined in claim 3, further comprising transmitter means coupled to said controller means, tripping of said sensor means causing said transmitter means to generate a distress signal indicative of an attempt to perform a wrongful act on said vehicle.

20. A system to prevent theft of a vehicle and operation thereof by an incapacitated person, comprising:
- a keyboard including a plurality of selectively actuable keys for entering a code;
- controller means coupled to a vehicle, said controller means being responsive to actuation of one or more of said keys to establish a first condition or a second condition, in said first condition said vehicle being

8

EP 0 373 076 A2

allowed to operate, in said second condition said vehicle being inhibited from operating, said controller means including:

a) code verification means to determine whether a keys actuation sequence forms an allowed code;

- timer means to determine if said keys actuation sequence has been completed within a predetermined time period, said controller means establishing said first condition when a keys actuation sequence corresponds to an allowed code, when said keys actuation sequence does not correspond to an allowed code or said keys actuation sequence has not been completed within said predetermined time period, said controller means establishing said second condition for a preset time period.

21. For use with a vehicle, a system including:

- a keyboard comprising a plurality of selectively actuable keys for entering a code;
- first means responsive to actuation of keys on said keyboard to determine whether a key actuation sequence corresponds to an allowed code;
- second means responsive to actuation of keys on said keyboard to determine whether a keys actuation sequence has been completed within a predetermined time period;
- third means coupled to said vehicle, said third means being responsive to said first and second means to:

a) inhibit said vehicle from operating for a preset time period when said keys actuation sequence does not correspond to an allowed code or said keys actuation sequence has not been completed within said predetermined time period;

b) allow said vehicle to operate when said keys actuation sequence corresponds to an allowed code and has been completed within said predetermined time period.

22. A system to prevent theft of a vehicle and operation thereof by an incapacitated person, comprising:

- a keyboard including a plurality of selectively actuable keys for entering a code;
- controller means coupled to a vehicle, said controller means being responsive to actuation of one or more of said keys to establish a first or second condition, in said first condition said vehicle being allowed to operate, in said second condition said vehicle being inhibited from operating;
- a display unit connected to the controller means;

said controller means comprising:

(a) first code verification means to determine whether a first keys actuation sequence entered on the keyboard by a driver of the vehicle corresponds to an anti-theft code stored in said controller means;

(b) means for generating a random code and for displaying said random code on the display unit;

(c) second code verification means to determine whether a second keys actuation sequence entered on the keyboard by the driver corresponds to said displayed random code;

wherein said controller means establishes said first condition in which said vehicle is allowed to operate when the first and second keys actuation sequences entered on the keyboard by the driver are correct.

23. The system of claim 22, wherein said second code verification means comprises:

means for measuring the time of depression of each key during entering of the second keys actuation sequence; and

means for measuring the time required by the driver to enter on the keyboard the entire second keys actuation sequence;

wherein an attempt to enter the second keys actuation sequence is unsuccessful when the time of depression of each key is shorter than a first predetermined time period and/or the time required by the driver to enter the entire second keys actuation sequence is longer than a second predetermined time period.

24. The system of claim 22, wherein said controller means comprises means for activating an audible alarm after a predetermined number of unsuccessful attempts by the driver to enter on the keyboard the correct first keys actuation sequence.

25. The system of claim 22, in which said controller means comprises:

means for storing at least two anti-theft codes; and

means for activating either one of said two anti-theft codes;

wherein the controller means recognizes only the activated anti-theft code.

26. The system of claim 25, wherein the display unit comprises means for indicating which one of said anti-theft codes is activated.

27. The system of claim 22, in which said random code includes a plurality of digits sequentially displayed on the said display unit.

28. The system of claim 22, wherein said controller means comprises means for establishing said second condition in which the vehicle is inhibited from operating after a predetermined number of unsuccessful attempts by the driver to enter the correct second keys actuation sequence.

9

Fig. 1

Fig. 2

EP 0 373 076 A2

Neu eingereicht / R
Nouvellement d

FIG. 3

EP 0 373 076 A2

VREF   ANGND          POWER          FREQUENCY        32
                      DOWN           REFERENCE

A/D
CONVERTER      REGISTER         CLOCK      35      MEMORY
               ALU.             GEN.
        33                      104    8
232
BYTE           A-BUS
REGISTER
FILE                   CPU
S/N
        110                                              CONTROL
       WATCHDOG                             TIMER I      SIGNALS
MUX    TIMER                                TIMER 2      MEMORY
                                                         CONTROLER
        100                          102    16    106    PORT 3
D-BUS              16                                    ADDR
                                                         DATE
                                                         BUS
        PULSE    SERIAL    BAUD                          PORT 4
        WIDTH    PORT      RATE            HIGH
        MOD.               GEN.           SPEED
                                          I/O

                P2 MULTIPLEXER                          Fig.4

PORT 0  PORT I    PORT ALL              HSI HSO
                  FUNCTION

INITIALISATION — *200*
-DISPLAY OFF
-PILOT LAMP OFF
- DISABLING VEHICLE(RELAYS OPEN)

READING SENSORS

*202*

SENSORS OK ?

*204*   *206*

YES

-FLASH PILOT LAMP
-PERFORM SELF DIAGNOSTIC ON CONTROLLER
-DISPLAY "E" IN CASE OF MALFUNCTION

NO

IGNITION ON ?   NO   *208*   NO

IN SHUT-OFF MODE FOR LESS THAN ONE HOUR ?

-ACTIVATE SIREN
-ACTIVATE TRANSMITTER
-DISPLAY "A"

YES

-NT (NUMBER OF KEYS DEPRESSED)=O
-NC (NUMBER OF ATTEMPTS ALLOWED)=5
-TC (ALLOTTED TIME TO DIAL CODE)=O   *209*

*210*

DISPLAY CURRENT VALUE OF NC

NO   DEPRESSED KEY ?

*212*

*214*

START CALCULATING TC

VALIDATED NUMERIC KEY ?

*216*   NO   SET ERROR FLAG

YES

NT = NT + I   *218*

YES   NT < 4 ?   *220*

NO

A

FIG. 5A

B   C

(A) TC OK AND CODE ALLOWED    (B)    (C)

224

228

NO → SET ERROR FLAG

YES

226 DEPRESSED KEY ? — NO

YES

230 KEY IS NUMERIC ? — YES → SET ERROR FLAG

NO

232 ERROR FLAGS FOUND ? — NO → NC=NC-1 → 234  NC=0 ? 236 ← NO

YES

KEY="C" ? — YES

YES → -DISPLAY "b" -START CALCULATING -SHUT-OFF MODE TIME

NO

-ALLOW VEHICLE TO OPERATE -CLOSE RELAYS    240

235 -DESACTIVATE PRESENT CODE -ACTIVATE SECONDARY CODE

242 IGNITION LOCK "ON" — YES → -DISPLAY OFF

-PERFORM SELF DIAGNOSTIC ON CONTROLLER

-DISPLAY "E" IN CASE OFF MALFUNCTION

-TIME IGNITION LOCK IS "OFF"=0

NO  TIME IGNITION IS "OFF">2 MIN ? — NO

YES

-DISABLE VEHICLE -OPEN RELAYS

FIG. 5B